# EUROPEAN PATENT APPLICATION

(11) **EP 0 863 279 A2**
(43) Date of publication of application: **09.09.1998**
(21) Application number: 98103579.3
(22) Date of filing: 02.03.1998
(51) Int. Cl.: E04H 6/00, E04H 6/08

(54) **Enclosed car park immersed in water, particularly in water stretches close to the shore of lakes and seas in general**

(30) Priority: 07.03.1997 IT MI970517
(71) Applicant: Martini Alfredo S.p.A., 22078 Turate (Como) (IT); Sogam S.a.g.l., 6917 Barbengo (CH); Studio d'Ingegneria Civile Passera & Pedretti S.A., 6916 Grancia (CH)
(72) Inventor: Passera, Rinaldo, 6963 Pregassona (CH); Bianchi, Giorgio, 6963 Pregassona (CH)
(74) Representative: Modiano, Guido, Dr.-Ing.

(57) **Abstract**

An enclosed car park immersed in the water of lakes and seas, constituted by a monolithic reinforced-concrete structure (1) which is substantially shaped like a parallelepiped and is internally divided into one or two superimposed levels (8,8a), each whereof is divided into enclosed spaces or garages (10) for individual motor vehicles, aligned in parallel or herringbone rows with a passage lane (11,11a) between the rows, and with ramps (12,13) for the ascent and descent of cars and stairs for pedestrians; the structure (1) is submerged in the water (3) of a lake or sea proximate to the shore and anchored to the bed thereof by means of tension elements (7,7a) which are preset so as to contrast the thrust of the water and keep the structure (1) stably submerged so that its upper part lies above the maximum level (5) that can be reached by the water (3); the ascent (11) and descent (13) ramps for cars and for pedestrians are connected to the shore optionally by means of bridges for connection to the road system or the like. Separate spaces are further provided, inside the structure (1) of the enclosed car park, for the fire-fighting, alarm, ventilation and drainage systems and for all the systems required for the operation of the enclosed car park, while on the upper surface, above water level, there are free areas or various arrangements for recreation, games and the like, and there is a floating marina.

## Description

The present invention relates to an enclosed car park or garage immersed in water stretches of lakes and seas in general, which includes, on the outer surface above the (maximum) water level, various arrangements for amusement, recreation and services, and a floating marina for recreational craft.

It is well-known that the shortage of parking spaces for motor vehicles has long caused a serious traffic problem not only in urban centers but also and especially in tourist resorts, particularly lakeshore or seaside bathing resorts, where the space available for parking near the shore or beach is either nonexistent or absolutely insufficient in periods in which there is a considerable tourist influx.

Moreover, it is well-known that also when there are free areas close to lake or sea shores, it is in any case forbidden, for stability reasons and often also for traffic and landscape-protection reasons, to erect buildings and other fixed structures. Accordingly, the problem of parking spaces is even more strongly felt in these cases.

The aim of the present invention is to solve, in many cases, the problem of parking spaces in tourist resorts, or in the vicinity of important ports, and more particularly in lakeshore tourist resorts and in some cases seaside resorts, without requiring the presence of building areas in the vicinity of the shores or beaches.

Within the scope of this aim, an object of the present invention is to provide large-capacity enclosed car parks, utilizing the stretch of water in the vicinity of shores or beaches of lakes and/or seas, said enclosed car park being structured so that it can be connected directly to roads used for ordinary traffic or similar accesses, so as to allow easy and quick use by both motor vehicles and pedestrians.

Another object of the present invention is to provide an enclosed car park which is conceived and structured so as to comprise a plurality of floating wharves which form, as a whole, a marina with a plurality of berths for recreational craft.

Another object of the present invention is to provide an enclosed car park which is submerged and has no superstructure.

Another object of the present invention is to provide an enclosed car park by utilizing the stretch of water in front of the shore or beach of bathing resorts, said enclosed car park also having all the necessary safety and access infrastructures and an area for recreation and for meeting places and the like.

This aim, these objects and others which will become apparent hereinafter are advantageously achieved by an enclosed car park suitable to solve the problem of parking in the areas proximate to lakeside and seaside bathing resorts, said enclosed car park being constituted, according to the present invention, by a monolithic reinforced-concrete structure which is substantially shaped like a parallelepiped and is internally divided into one or two superimposed stories, each whereof is divided into enclosed spaces or garages for individual motor vehicles, aligned in parallel rows with a passage lane between said rows, and with ramps for the ascent and descent of cars and stairs for pedestrians, said structure being submerged in the water of a lake or sea proximate to the shore and anchored to the bed thereof by means of tension elements which are preset so as to contrast the thrust of the water and keep said structure stably submerged so that its upper part lies above the maximum level that can be reached by the water, said ascent and descent ramps for cars and for pedestrians being connected to the shore by means of bridges for connection to the road system or the like, separate spaces being further provided, inside the structure of the enclosed car park, for the fire-fighting, alarm, ventilation and drainage systems and for all the systems required for the operation of said enclosed car park, while on the upper surface, above water level, there are free areas or various arrangements for recreation, games and the like.

More particularly, floating wharves are anchored to the opposite vertical sides of the structure that constitutes the submerged enclosed car park and are arranged so as to be mutually equidistant and have such heights as to be flush with the upper pedestrian surface, the wharves advantageously constituting berths for recreational craft and effective breakwaters.

Moreover, between the various superimposed stories pedestrian passages are provided to allow users, after parking the vehicles, to return to the surface quickly and easily.

Further characteristics and advantages of the present invention will become apparent from the following detailed description, given with reference to the accompanying drawings, which are provided merely by way of non-limitative example and wherein:
Figure 1 is a schematic plan view of an enclosed car park immersed in the water for example of a lake, executed according to the present invention and connected to the existing or specifically-provided road system and provided with several parallel wharves;
Figure 2 is a likewise schematic longitudinal sectional view of Figure 1, taken along a median plane;
Figure 3 is another schematic transverse sectional view of the enclosed car park of Figure 1;
Figure 4 is a plan view of a parking layout of the submerged enclosed car park shown in the above figures; and
Figures 5 and 6 are longitudinal sectional views of two different embodiments of the enclosed car park according to the present invention.

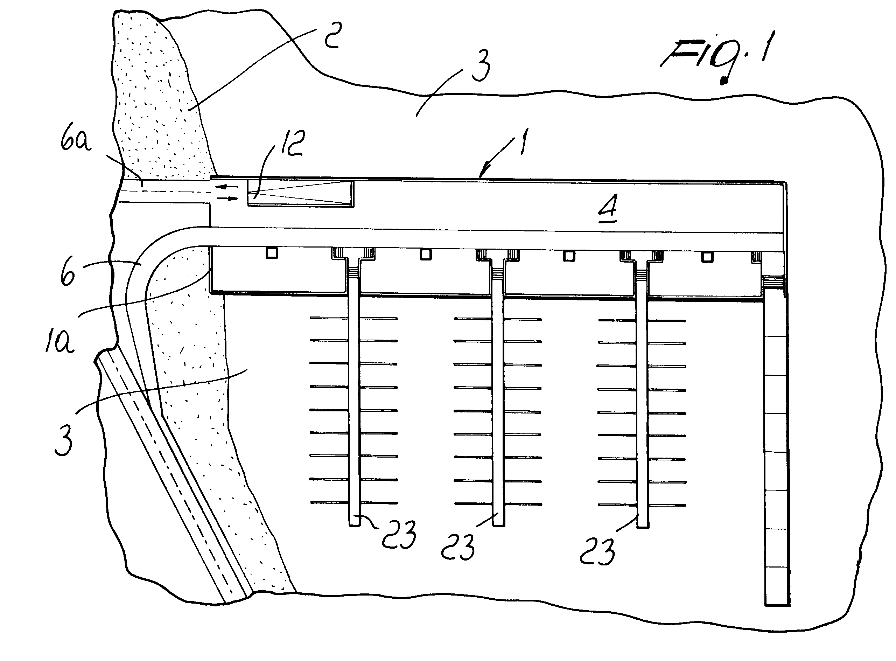

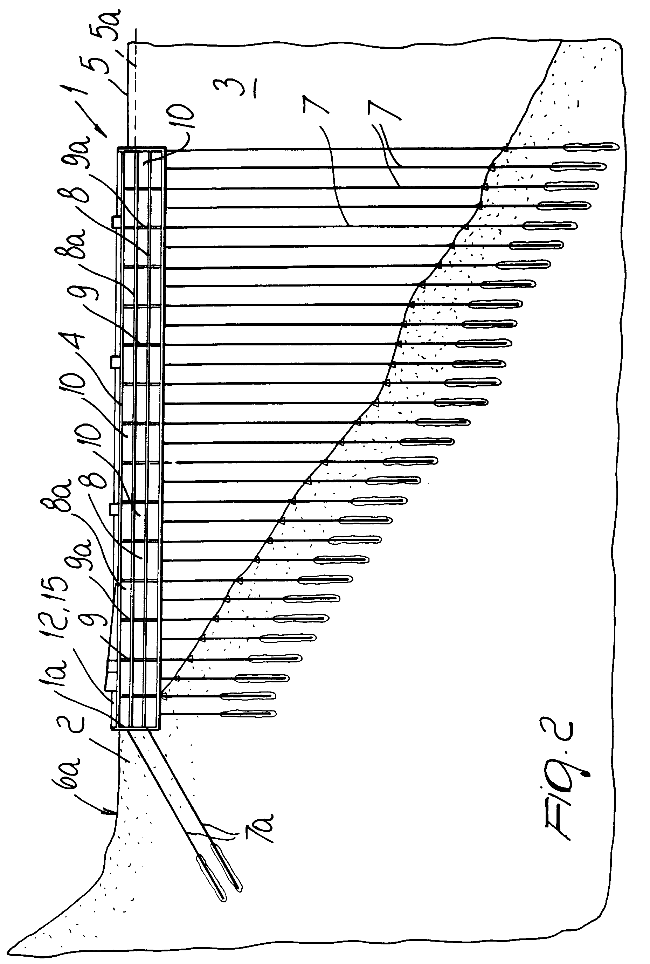

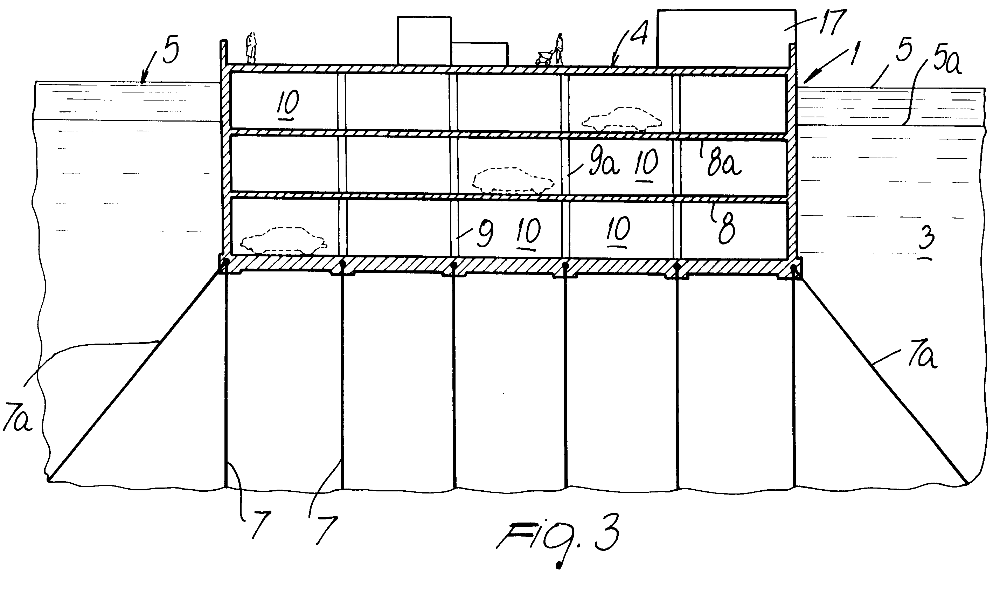

With reference to the above figures, and particularly to Figures 1 to 4, the submerged enclosed car park for motor vehicles and the like is substantially constituted by a monolithic box made of prestressed reinforced concrete, generally designated by the reference numeral 1 in the figures, which is shaped like a parallelepiped, is anchored, by means of one side 1a, to the bed of the shore 2 (Figures 1 and 2), and is kept immersed in the water 3 so that the upper surface 4 of the box 1 (walkable surface) protrudes above the maximum level 5 (Figures 2 and 3) that the water can reach in any period of the year due to tides or increases in capacity due to natural causes.

Accordingly, the box 1 is kept practically in a partially submerged position; this also allows to maintain, in many cases, the level of the upper surface substantially flush with the road system (roads, squares or the like) for vehicles and/or pedestrians, as shown for example in Figures 1 and 2, wherein the surface 4 is practically at the same level as a road 6 or a level open space 6a (Figure 1).

The box is also kept in a stable position not only by its side 1a, which is anchored to the shore 2, but also by a plurality of traction elements 7, which are rigidly coupled to the bottom of the box and are orientated vertically thereto so that they can be anchored to the bed of the basin, and by traction elements 7a which are orientated diagonally with respect to the box; the function of the plurality of traction elements is of course to allow the box to react to the upward thrust that it receives from the water (Figures 2 and 3) both when said water is at the minimum level 5a and when it reaches the maximum level 5.

It is also possible to keep the enclosed car park fully submerged without any superstructure above water level.

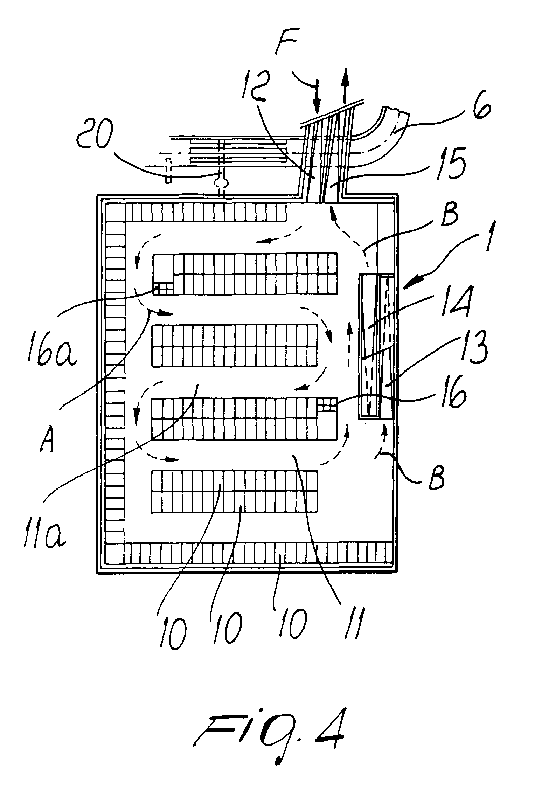

Moreover the inside of the box 1 is divided, by means of two flat floor slabs 8-8a having a constant thickness, into three rectangular compartments and then, by means of equidistant pillars 9-9a etcetera, into enclosed spaces or garages 10 for individual cars. The garages are preferably arranged, on each story, in opposite pairs arranged side by side along parallel lines, as clearly shown in Figure 4, and between each row of garages there is provided a lane 11-11a etcetera whose width allows the cars to enter and exit the garages and then circulate as shown by the arrow A for cars entering the enclosed car park and by the arrow B for cars leaving the enclosed car park (Figure 4).

More particularly, as shown by Figure 4, the cars enter the enclosed car park 1 by means of a passage (substantially a ramp) 12 (arrow F) which allows the cars to park directly on the upper story 8a and also on the lower story 8 (Figure 3) by means of the down-ramp 13. The cars can then return to the upper story by means of the up-ramp 14 and then exit the enclosed car park through the outer exit 15.

Pedestrian stairways and/or elevators 16-16a are further provided between the various garage stories and lead to the walkable upper surface 4 (Figure 4).

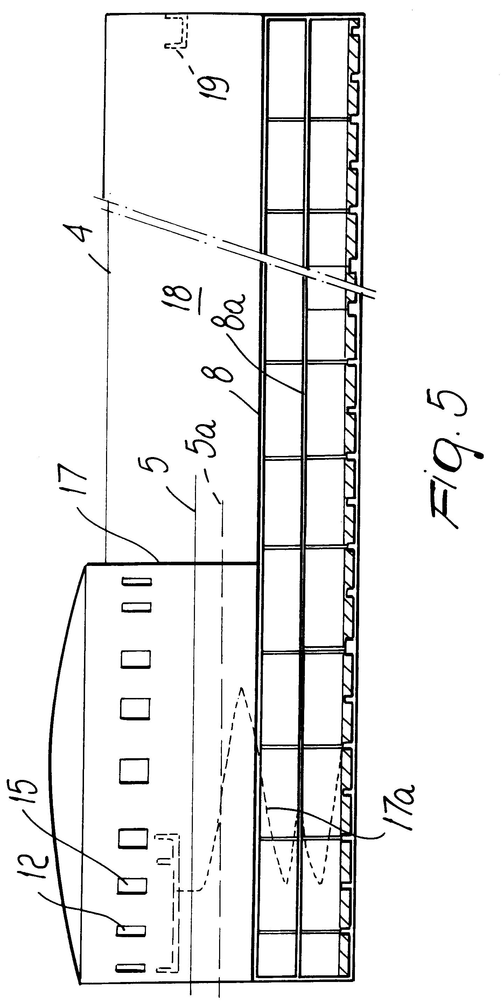

Also according to the present invention, the enclosed car park can have two parking stories (Figure 5) which are immersed in the water and an upper story which partially rises above the water, is divided into two or more spaces, such as a tower 17 that contains the vehicle ascent and descent ramps 17a, with an entrance 12 and an exit 15, and corresponding pedestrian passages, and then a large rectangular compartment 18 (Figure 5) which can be used as a recreation space, a restaurant, a club house and as a goods depot; from this compartment 18, the pedestrians can use pedestrian passages 19 to reach the lower pedestrian stories. Other pedestrian passages 20, substantially gangways, can be provided (Figure 4) when the upper surface 4 of the enclosed car park is at a level which is substantially equal to the level of the shore or beach and is thus connected to the vehicle and pedestrian road system 6.

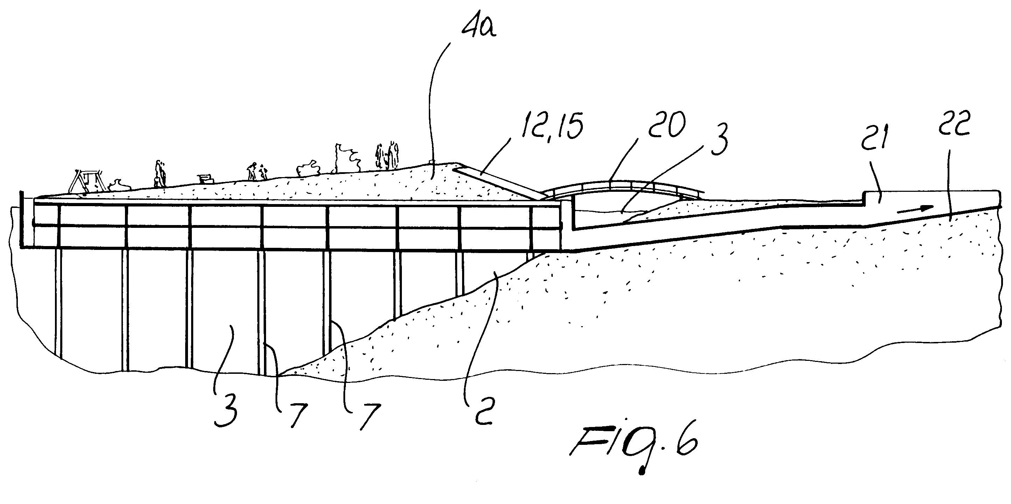

In the case of a steep shore 2, as in Figure 6, the gangways 20 are constituted by one or more bridges and the entrance 12 and the exit 15 of the cars entering and leaving the enclosed car park are connected to excavated areas or tunnels 21-22, as also shown in Figure 6.

The upper surface 4 above the water level can be used as an amusement, strolling or game area, and can also be partially provided with sloping areas 4a with green spaces, as shown in Figure 6.

Preferably, the club house runs along the entire length of the upper story above the water level and along part of its width (Figure 5).

Moreover, also according to the present invention, equidistant floating wharves, designated by the reference numeral 23 in the plan view of Figure 1, can be anchored to the opposite longitudinal vertical sides of the box and are suitable to constitute berths for recreational craft as well as advantageous breakwaters.

There is also provided a system for ventilating the inside of the enclosed car park which comprises a ventilation port located in the south region (opposite to the tower region), while the stale air is expelled through the vehicle access tower.

There are also provided compartments and/or spaces, preferably located at the opposite sides of the enclosed car park, for containing the systems for controlling air pollution inside the enclosed car park, for fire alarms and for the necessary electrical and service systems.

Fire lanes are also provided at the various stories for safety reasons.

Automatic access barriers and automatic systems for collecting the cost of the ticket required for entry can be installed at the entrance of the tower 17; likewise, there are provided restroom facilities with a pumping station and there is the necessary set of signs for the users of the enclosed car park.

Finally, the above-described enclosed car park is environmentally acceptable since, being made of reinforced concrete, it does not interfere with migratory streams; moreover, the enclosed car park can be built at yards which are distant from the site chosen for its installation and therefore without hindering traffic and accesses to public services, such as shops, restaurants and the like, and without causing noise pollution in the vicinity and similar drawbacks.

From the above description it is evident that the invention described above and illustrated according to some of its practical embodiments is susceptible of structurally and functionally equivalent modifications and variations without abandoning the scope of the protection of said invention.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An enclosed car park, particularly suitable to solve the problem of parking in the areas close to lakeside and seaside bathing resorts, characterized in that it is constituted by a monolithic reinforced-concrete structure which is substantially shaped like a parallelepiped and is internally divided into one or two superimposed levels, each whereof is divided into enclosed spaces or garages for individual motor vehicles, aligned in parallel rows with a passage lane between said rows, and with ramps for the ascent and descent of cars and stairs for pedestrians, said structure being submerged in the water of a lake or sea proximate to the shore and anchored to the bed thereof by means of tension elements which are preset so as to contrast the thrust of the water and keep said structure stably and completely submerged or so that its upper part lies above the maximum level that can be reached by the water, said ascent and descent ramps for cars and for pedestrians being connected to the shore by means of bridges for connection to the road system or the like, separate spaces being further provided, inside the structure of the enclosed car park, for the fire-fighting, alarm, ventilation and drainage systems and for all the systems required for the operation of said enclosed car park, while on the upper surface, above water level, there are free areas or various arrangements for recreation, games and the like.

2. An enclosed car park according to claim 1, characterized in that floating wharves are anchored to the opposite vertical sides of said structure immersed in water and are suitable to constitute berths for recreational craft as well as advantageous breakwaters.

3. An enclosed car park according to claim 1, characterized in that pedestrian passages, such as stairs and/or elevators, are provided between the various parking stories, leading up to the upper story above the water level.

4. An enclosed car park according to claim 3, characterized in that said upper story above the water level is at least partially green-planted also on sloping parts of said story.

5. An enclosed car park according to the preceding claims, characterized in that in case of steep shores with vehicle road system at a level which is higher than the entrance and exit of the car park, the ascending and descending ramps have a path inside a tower which is elevated with respect to the upper story of the car park, so as to connect said entrance and exit to said road system by means of tunnels or roads excavated within said shore.
